# EUROPEAN PATENT SPECIFICATION

(11) **EP 3 856 546 B1**
(45) Date of publication and mention of the grant of the patent: **19.04.2023**
(21) Application number: 19779260.9
(22) Date of filing: 13.09.2019
(51) Int. Cl.: B60H 1/00, B60H 1/32, B60K 25/08, B60P 3/20, F25D 11/00, H02J 7/14, B60L 58/24, B60L 58/27, H01M 10/615

(54) **TRANSPORTATION REFRIGERATION UNIT WITH COLD CLIMATE BATTERY HEATING**
TRANSPORTKÜHLEINHEIT MIT KALTKLIMABATTERIEHEIZUNG
UNITÉ DE RÉFRIGÉRATION DE TRANSPORT AVEC CHAUFFAGE DE BATTERIE POUR CLIMAT FROID

(30) Priority: 28.09.2018 US 201862737973 P
(43) Date of publication of application: 04.08.2021
(73) Proprietor: Carrier Corporation, Palm Beach Gardens, FL 33418 (US)
(72) Inventor: SAROKA, Mary D., Syracuse, New York 13221 (US); BURCHILL, Jeffrey J., Syracuse, New York 13057 (US)
(74) Representative: Dehns
(86) International application number: PCT/US2019/050912
(87) International publication number: WO 2020/068446

(56) References cited:
- WO-A1-2017/219140
- SE-C2- 535 563
- US-A1- 2012 101 673
- US-A1- 2018 029 436

## Description

### BACKGROUND

The invention relates to transportation refrigeration units, and more specifically to an apparatus and a method for controlling environmental conditions for a power source of a transportation refrigeration unit.

Traditional refrigerated cargo trucks or refrigerated tractor trailers, such as those utilized to transport cargo via sea, rail, or road, is a truck, trailer or cargo container, generally defining a cargo compartment, and modified to include a refrigeration system located at one end of the truck, trailer, or cargo container. Refrigeration systems typically include a compressor, a condenser, an expansion valve, and an evaporator serially connected by refrigerant lines in a closed refrigerant circuit in accord with known refrigerant vapor compression cycles. A power unit, such as a combustion engine, drives the compressor of the refrigeration unit, and may be diesel powered, natural gas powered, or other type of engine. In many tractor trailer transport refrigeration systems, the compressor is driven by the engine shaft either through a belt drive or by a mechanical shaft-to-shaft link. In other systems, the engine of the refrigeration unit drives a generator that generates electrical power, which inturn drives the compressor.

With current environmental trends, improvements in transportation refrigeration units are desirable particularly toward aspects of efficiency, sound and environmental impact. With environmentally friendly refrigeration units, improvements in reliability, cost, and weight reduction is also desirable.

US 2018/029436 A1 discloses a mobile hybrid electric temperature-controlled system connected to a vehicle, which manages power by monitoring of temperatures and voltages (and possibly other factors) and by delivery of power as a function of the factors monitored. SE 535563 C2 discloses an arrangement for cooling an energy storage device in a vehicle, comprising a conduit circuit, fan, cooler, and adjustable throttling means for cooling.

### BRIEF SUMMARY

According to a first aspect of the invention, a transportation refrigeration unit is provided. The transportation refrigeration unit includes: a compressor configured to compress a refrigerant; a compressor motor configured to drive the compressor, the compressor motor being powered by an energy storage device; an evaporator heat exchanger operatively coupled to the compressor; a controller configured to control operation of the transportation refrigeration unit; an ambient air temperature sensor in electronic communication with the controller, the ambient air temperature sensor configured to detect ambient air temperature outside of the transportation refrigeration unit, wherein the controller is configured to adjust operation of a temperature control system for the energy storage device in response to the ambient air temperature, and the temperature control system is configured to adjust a temperature of the energy storage device. The temperature control system is an electric heater.

In addition to one or more of the features described above, or as an alternative, further embodiments may include a DC/DC converter configured to provide power to the electric heater by converting a small portion of the high voltage direct current of the energy storage device to a low voltage direct current.

In addition to one or more of the features described above, or as an alternative, further embodiments may include that the energy storage device includes a battery system.

In addition to one or more of the features described above, or as an alternative, further embodiments may include that the battery system is configured to utilize a selected number of battery cells within the battery system to provide power to the electric heater, wherein the selected number of battery cells have a voltage less than or equal to 15 VDC.

In addition to one or more of the features described above, or as an alternative, further embodiments may include that the electric heater and the energy storage device are located outside of the transportation refrigeration unit.

In addition to one or more of the features described above, or as an alternative, further embodiments may include that the electric heater and the energy storage device are located within the transportation refrigeration unit.

In addition to one or more of the features described above, or as an alternative, further embodiments may include that the controller activates the electric heater when the ambient air temperature is less than a selected temperature.

In addition to one or more of the features described above, or as an alternative, further embodiments may include that the electric heater utilizes at least one of convection heating and conduction heating.

In addition to one or more of the features described above, or as an alternative, further embodiments may include that the electric heater utilizes at least one of air and a liquid for the convection heating to transfer heat from the electric heater to the energy storage device.

According to another aspect of the invention, a method of operating a transportation refrigeration unit is provided. The method includes: powering a transportation refrigeration unit using an energy storage device; detecting an ambient air temperature outside of the transportation refrigeration unit using an ambient air temperature sensor; and regulating a temperature of the energy storage device in response to the ambient air temperature using a temperature control system. The temperature control system is an electric heater.

In addition to one or more of the features described above, or as an alternative, further embodiments may include: converting a small portion of the high voltage direct current of the energy storage device to a low voltage direct current to provide power to the electric heater using a DC/DC converter.

In addition to one or more of the features described above, or as an alternative, further embodiments may include that the energy storage device includes a battery system.

In addition to one or more of the features described above, or as an alternative, further embodiments may include: powering the electric heater using a selected number of battery cells within the battery system, wherein the selected number of battery cells have a voltage less than or equal to 15 VDC.

In addition to one or more of the features described above, or as an alternative, further embodiments may include that the electric heater and the energy storage device are located outside of the transportation refrigeration unit.

In addition to one or more of the features described above, or as an alternative, further embodiments may include that the electric heater and the energy storage device are located within the transportation refrigeration unit.

In addition to one or more of the features described above, or as an alternative, further embodiments may include: activating the electric heater when the ambient air temperature is less than a selected temperature.

In addition to one or more of the features described above, or as an alternative, further embodiments may include that the electric heater utilizes at least one of convection heating and conduction heating.

In addition to one or more of the features described above, or as an alternative, further embodiments may include that the electric heater utilizes at least one of air and a liquid for the convection heating to transfer heat from the electric heater to the energy storage device.

Technical effects of embodiments of the present invention include a transportation refrigeration unit powered by an energy storage device that is thermodynamically adjusted when a temperature outside of the TRU is detected by an outside air temperature of the TRU.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

The following descriptions should not be considered limiting in any way. With reference to the accompanying drawings, like elements are numbered alike:
FIG. 1 is a perspective view of a transportation refrigeration system having an engineless transportation refrigeration unit as one, non-limiting, according to an embodiment of the present invention;
FIG. 2 is a schematic of the engineless transportation refrigeration unit, according to an embodiment of the present invention;
FIG. 3 is a block diagram of a power supply interface of the transportation refrigeration unit, according to an embodiment of the present invention; and
FIG. 4 is a flow diagram illustrating a method of operating a transportation refrigeration unit, according to an embodiment of the present invention.

### DETAILED DESCRIPTION

A detailed description of one or more embodiments of the disclosed apparatus and method are presented herein by way of exemplification and not limitation with reference to the Figures.

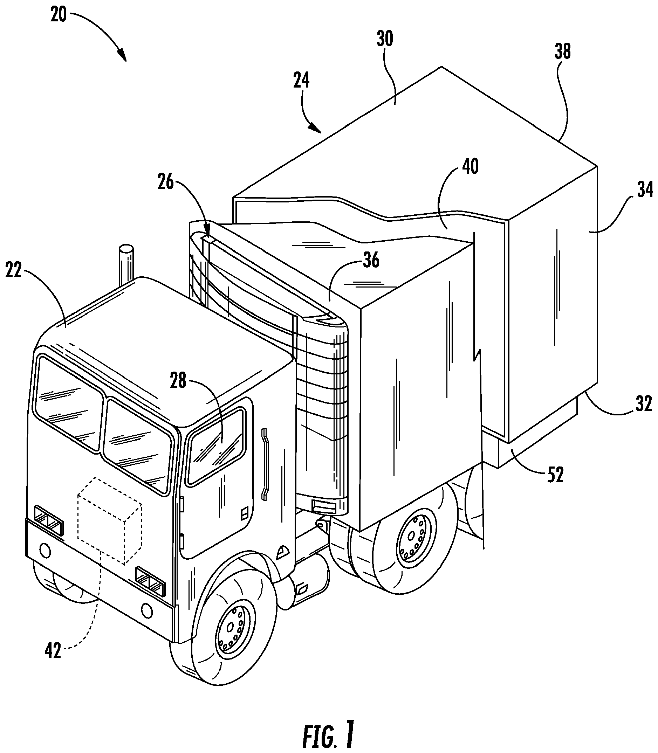

Referring to FIG. 1, a transport refrigeration system 20 of the present invention is illustrated. In the illustrated embodiment, the transport refrigeration systems 20 may include a tractor or vehicle 22, a container 24, and an engineless transportation refrigeration unit (TRU) 26. The container 24 may be pulled by a vehicle 22. It is understood that embodiments described herein may be applied to shipping containers that are shipped by rail, sea, air, or any other suitable container, thus the vehicle may be a truck, train, boat, airplane, helicopter, etc.

The vehicle 22 may include an operator's compartment or cab 28 and an engine 42 which is part of the powertrain or drive system of the vehicle 22. The engine 42 may be a propulsion engines including but not limited to an electric motor, a combustion engine, or a combination thereof. The container 24 may be coupled to the vehicle 22 and is thus pulled or propelled to desired destinations. The trailer may include a top wall 30, a bottom wall 32 opposed to and spaced from the top wall 30, two side walls 34 spaced from and opposed to one-another, and opposing front and rear walls 36, 38 with the front wall 36 being closest to the vehicle 22. The container 24 may further include doors (not shown) at the rear wall 38, or any other wall. The walls 30, 32, 34, 36, 38 together define the boundaries of a cargo compartment 40. Typically, transport refrigeration systems 20 are used to transport and distribute cargo, such as, for example perishable goods and environmentally sensitive goods (herein referred to as perishable goods). The perishable goods may include but are not limited to fruits, vegetables, grains, beans, nuts, eggs, dairy, seed, flowers, meat, poultry, fish, ice, blood, pharmaceuticals, or any other suitable cargo requiring cold chain transport. In the illustrated embodiment, the TRU 26 is associated with a container 24 to provide desired environmental parameters, such as, for example temperature, pressure, humidity, carbon dioxide, ethylene, ozone, light exposure, vibration exposure, and other conditions to the cargo compartment 40. In further embodiments, the TRU 26 is a refrigeration system capable of providing a desired temperature and humidity range.

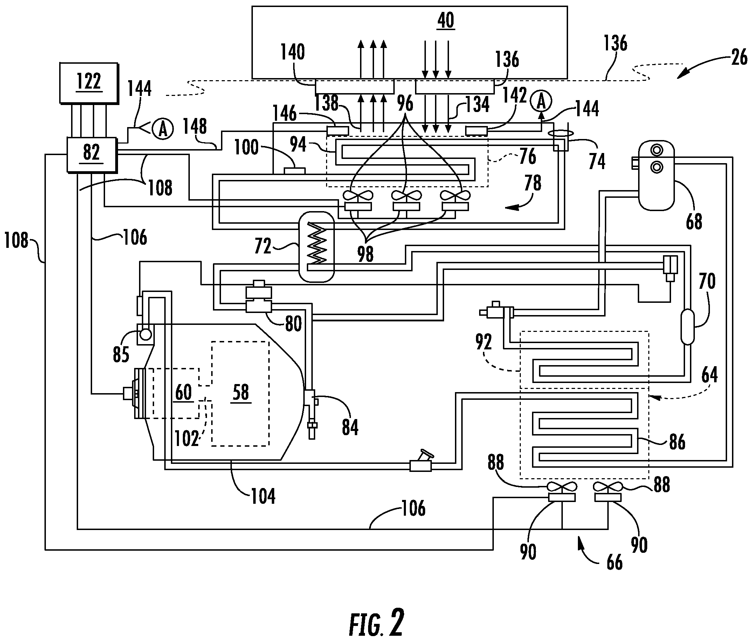

Referring to FIGS. 1 and 2, the container 24 is generally constructed to store a cargo (not shown) in the compartment 40. The engineless TRU 26 is generally integrated into the container 24 and may be mounted to the front wall 36. The cargo is maintained at a desired temperature by cooling of the compartment 40 via the TRU 26 that circulates refrigerated airflow into and through the cargo compartment 40 of the container 24. It is further contemplated and understood that the TRU 26 may be applied to any transport compartments (e.g., shipping or transport containers) and not necessarily those used in tractor trailer systems. Furthermore, the transport container may be a part of the of the vehicle 22 or constructed to be removed from a framework and wheels (not shown) of the container 24 for alternative shipping means (e.g., marine, railroad, flight, and others).

The components of the engineless TRU 26 may include a compressor 58, an electric compressor motor 60, an electric energy storage device 152, a condenser 64 that may be air cooled, a condenser fan assembly 66, a receiver 68, a filter dryer 70, a heat exchanger 72, an expansion valve 74, an evaporator 76, an evaporator fan assembly 78, a suction modulation valve 80, and a controller 82 that may include a computer-based processor (e.g., microprocessor) and the like as will be described further herein. Operation of the engineless TRU 26 may best be understood by starting at the compressor 58, where the suction gas (e.g., natural refrigerant, hydro-fluorocarbon (HFC) R-404a, HFC R-134a... etc) enters the compressor 58 at a suction port 84 and is compressed to a higher temperature and pressure. The refrigerant gas is emitted from the compressor 58 at an outlet port 85 and may then flow into tube(s) 86 of the condenser 64.

Air flowing across a plurality of condenser coil fins (not shown) and the tubes 86, cools the gas to its saturation temperature. The airflow across the condenser 64 may be facilitated by one or more fans 88 of the condenser fan assembly 66. The condenser fans 88 may be driven by respective condenser fan motors 90 of the fan assembly 66 that may be electric. By removing latent heat, the refrigerant gas within the tubes 86 condenses to a high pressure and high temperature liquid and flows to the receiver 68 that provides storage for excess liquid refrigerant during low temperature operation. From the receiver 68, the liquid refrigerant may pass through a sub-cooler heat exchanger 92 of the condenser 64, through the filter-dryer 70 that keeps the refrigerant clean and dry, then to the heat exchanger 72 that increases the refrigerant sub-cooling, and finally to the expansion valve 74.

As the liquid refrigerant passes through the orifices of the expansion valve 74, some of the liquid vaporizes into a gas (i.e., flash gas). Return air from the refrigerated space (i.e., cargo compartment 40) flows over the heat transfer surface of the evaporator 76. As the refrigerant flows through a plurality of tubes 94 of the evaporator 76, the remaining liquid refrigerant absorbs heat from the return air, and in so doing, is vaporized and thereby cools the return air.

The evaporator fan assembly 78 includes one or more evaporator fans 96 that may be driven by respective fan motors 98 that may be electric. The air flow across the evaporator 76 is facilitated by the evaporator fans 96. From the evaporator 76, the refrigerant, in vapor form, may then flow through the suction modulation valve 80, and back to the compressor 58. The expansion valve 74 may be thermostatic or electrically adjustable. In an embodiment, as depicted, the expansion valve 74 is thermostatic. A thermostatic expansion valve bulb sensor 100 may be located proximate to an outlet of the evaporator tube 94. The bulb sensor 100 is intended to control the thermostatic expansion valve 74, thereby controlling refrigerant superheat at an outlet of the evaporator tube 94. The thermostatic expansion valve 74 may be an electronic expansion valve is in communication with the TRU controller 82. The controller 82 may position the valve in response to temperature and pressure measurements at the exit of the evaporator 76. It is further contemplated and understood that the above generally describes a single stage vapor compression system that may be used for HFCs such as R-404a and R-134a and natural refrigerants such as propane and ammonia. Other refrigerant systems may also be applied that use carbon dioxide (CO₂) refrigerant, and that may be a two-stage vapor compression system.

A bypass valve (not shown) may facilitate the flash gas of the refrigerant to bypass the evaporator 76. This will allow the evaporator coil to be filled with liquid and completely 'wetted' to improve heat transfer efficiency. With CO₂ refrigerant, this bypass flash gas may be re-introduced into a mid-stage of a two-stage compressor 58.

The compressor 58 and the compressor motor 60 may be linked via an interconnecting drive shaft 102. The compressor 58, the compressor motor 60 and the drive shaft 102 may all be sealed within a common housing 104. The compressor 58 may be a single compressor. The single compressor may be a two-stage compressor, a scroll-type compressor or other compressors adapted to compress HFCs or natural refrigerants. The natural refrigerant may be CO₂, propane, ammonia, or any other natural refrigerant that may include a global-warming potential (GWP) of about one (1).

Continuing with FIG. 2, with continued reference to FIG. 1. FIG. 2 also illustrates airflow through the TRU 26 and the cargo compartment 40. Airflow is circulated into and through and out of the cargo compartment 40 of the container 24 by means of the TRU 26. A return airflow 134 flows into the TRU 26 from the cargo compartment 40 through a return air intake 136, and across the evaporator 76 via the fan 96, thus conditioning the return airflow 134 to a selected or predetermined temperature. The conditioned return airflow 134, now referred to as supply airflow 138, is supplied into the cargo compartment 40 of the container 24 through the refrigeration unit outlet 140, which in some embodiments is located near the top wall 30 of the container 24. The supply airflow 138 cools the perishable goods in the cargo compartment 40 of the container 24. It is to be appreciated that the TRU 26 can further be operated in reverse to warm the container 24 when, for example, the outside temperature is very low.

A return air temperature sensor 142 (i.e., thermistor, thermocouples, RTD, and the like) is placed in the air stream, on the evaporator 76, at the return air intake 136, and the like, to monitor the temperature return airflow 134 from the cargo compartment 40. A sensor signal indicative of the return airflow temperature denoted RAT is operably connected via line 144 to the TRU controller 82 to facilitate control and operation of the TRU 26. Likewise, a supply air temperature sensor 146 is placed in the supply airflow 138, on the evaporator 76, at the refrigeration unit outlet 140 to monitor the temperature of the supply airflow 138 directed into the cargo compartment 40. Likewise, a sensor signal indicative of the supply airflow temperature denoted SAT 14 is operably connected via line 148 to the TRU controller 82 to facilitate control and operation of the TRU 26.

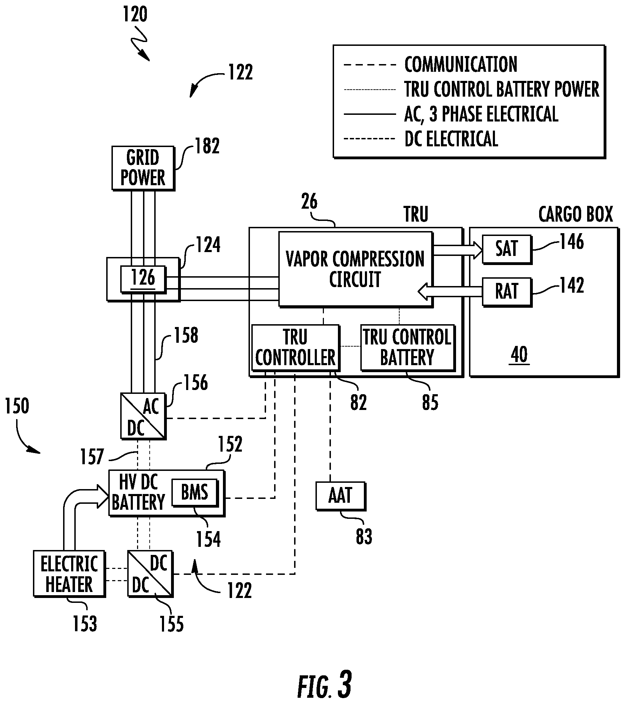

Referring now to FIGs. 2 and 3, with continued reference to FIG 1 as well, the TRU 26 may include or be operably interfaced with a power supply interface shown generally as 120. The power supply interface 120 may include, interfaces to various power sources denoted generally as 122 and more specifically as follows herein for the TRU 26 and the components thereof. In an embodiment, the power sources 122 may include, but not be limited to an energy storage device 152 and grid power 182. Each of the power sources 122 may be configured to selectively power the TRU 26 including compressor motor 60, the condenser fan motors 90, the evaporator fan motors 98, the controller 82, and other components 99 of the TRU 26 that may include various solenoids and/or sensors). The controller 82 through a series of data and command signals over various pathways 108 may, for example, control the application of power to the electric motors 60, 90, 98 as dictated by the cooling needs of the TRU 26.

The TRU 26 includes an ambient air temperature sensor 83 in electronic communication with the TRU controller 82. The ambient air temperature sensor detects ambient air temperature outside of the TRU 26.

The engineless TRU 26 may include an AC or DC architecture with selected components employing alternating current (AC), and others employing direct current (DC). For example, in an embodiment, the motors 60, 90, 98 may be configured as AC motors, while in other embodiments, the motors 60, 90, 98 may be configured as DC motors. The operation of the power sources 122 as they supply power to the TRU 26 may be managed and monitored by a power management system 124. The power management system 124 may include an electrical transformer. The power management system 124 is configured to determine a status of various power sources 122, control their operation, and direct the power to and from the various power sources 122 and the like based on various requirements of the TRU 26. In an embodiment, the TRU controller 82 receives various signals indicative of the operational state of the TRU 26 and determines the power requirements for the TRU system 26 accordingly and directs the power supply interface 120 and specifically the power management system 124 to direct power accordingly to address the requirements of the TRU 26. In one embodiment, the TRU controller monitors the RAT and optionally the SAT as measured by the return air temperature sensor 142 and supply air temperature sensor 146 respectively. The TRU controller 82 estimates the power requirements for the TRU 26 based on the RAT (among others) and provides commands accordingly to the various components of the power supply interface 120 and specifically the power management system 124 and energy storage system 150 to manage the conversion, and routing of power in the power supply interface 120 and TRU system 26.

The TRU 26 is controlled to a temperature setpoint instruction provided by a user of the TRU 26. The TRU controller 82 may determine an estimate power demand in response to the measured RAT and the setpoint value. For example, if the (RAT-Setpoint) is above a first threshold (i.e. > 10deg F), full power of the TRU 26 is needed (i.e. at Voltage, max. amps is known). If the (RAT-Setpoint) is between first threshold and second threshold, current is limited (at voltage) to achieve a middle power (i.e., 50% power). If the (RAT-Setpoint) is below second threshold, current is limited (at voltage) to achieve a minimum power (i.e. 20% power).

With respect to switching power, the TRU controller 82 knows if the TRU 26 is on and what power is needed for operation of the TRU 26. The TRU controller 82 may also be programmed to know whether or not grid power 182 is available or not. If the grid power 182 is available, the TRU 26 is On, and the state of charge of the energy storage device 152 indicates energy storage device 152 is fully charged, grid power 182 will satisfy TRU 26 power demand. If grid power 182 is available, the TRU 26 is On, and the energy storage device 152 is not fully charged, the power demand of the TRU 26 is satisfied as a first priority and then DC/AC inverter 156 will be activated to provide necessary charging amps to energy storage device 152 as a second priority. If grid power 182 is available, the TRU 26 is Off, and the energy storage device 152 is not fully charged, then the DC/AC inverter 156 will be activated to provide necessary charging amps to energy storage device 152. If grid power 182 is not available, all of the power demand for the TRU 26 is satisfied by the energy storage device 152.

The TRU controller 82 is configured to control the components in the TRU 26 as well as the components of the energy storage system 150 in accordance with operating needs of the transport refrigeration system 20. The TRU controller 82 is communicatively coupled to the DC/AC converter 156, battery management system 154, and DC/DC converter 155, such that operation of the converters 155, 156 and the energy storage device 152 meet the needs of the power demand of the TRU 26 and/or the heating demands of the energy storage device 152. The DC/DC converter 155 may be configured to provide power to the electric heater 153 by converting a small portion of the high voltage direct current of the energy storage device 152 to a low voltage direct current.

Continuing with FIG. 3 and the architecture of the power supply interface 120 and the various power sources 122 employed to power the TRU 26 and the components thereof. In an embodiment one of the power sources 122 may include, but not be limited to an energy storage system 150 operably coupled to the power management system 124. Furthermore, the grid power source 182 provides three phase AC power to the power management system 124 under selected conditions. The energy storage system 150 transmits direct current (DC) power 157 to and receives power from the power management system 124. The energy storage system 150 may include, but not be limited to the energy storage device 152, and DC/AC converter 156 and a battery management system 154. In one embodiment, the power management system 124 provides three phase AC power 158 to a DC/AC converter 156 to formulate a DC voltage and current to charge and store energy on the energy storage device 152. The energy storage device 152 supplies direct current to the DC/AC converter 156 to supply a three phase AC power158 for powering the TRU 26. The TRU may also include a dedicated TRU control battery 85 to power the TRU controller 82. For example, the TRU control battery 85 may include a 12V or 24V lead-acid (DC) battery to provide power to the TRU Controller 82. Power from the TRU control battery 85 is also used to support sensors and valve operations as needed.

The battery management system 154 monitors the performance of the energy storage device 152. For example, monitoring the state of charge of the energy storage device 152, a state of health of the energy storage device 152, and a temperature of the energy storage device 152. Examples of the energy storage device 152 may include a battery system (e.g., a battery or bank of batteries), fuel cells, flow battery, and others devices capable of storing and outputting electric energy that may be direct current (DC). The energy storage device 152 may include a battery system, which may employ multiple batteries organized into battery banks through which cooling air may flow for battery temperature control, as described in U.S. patent application Ser. No. 62/616,077, filed January 11, 2018. The battery system may be configured to utilize a selected number of battery cells within the battery system to provide power to the electric heater 153. In an embodiment, the selected number of battery cells have a voltage less than or equal to 15 VDC.

If the energy storage system 150 includes a battery system for the energy storage device 152, the battery system may have a voltage potential within a range of about two-hundred volts (200V) to about six-hundred volts (600V). Generally, the higher the voltage, the greater is the sustainability of electric power which is preferred. However, the higher the voltage, the greater is the size and weight of, for example, batteries in an energy storage device 152, which is not preferred when transporting cargo. Additionally, if the energy storage device 152 is a battery, then in order to increase either voltage and/or current, the batteries need to be connected in series or parallel depending upon electrical needs. Higher voltages in a battery energy storage device 152 will require more batteries in series than lower voltages, which in turn results in bigger and heavier battery energy storage device 152). A lower voltage and higher current system may be used, however such a system may require larger cabling or bus bars.In one embodiment, the energy storage device 152 may be contained within the structure 27 of the TRU 26. In an embodiment, the energy storage device 152 is located within the TRU 26, however other configurations are possible. In an embodiment, the energy storage device 152 is located outside of the TRU 26, however other configurations are possible. In another embodiment, the energy storage device 152 may be located with the container 24 such as, for example, underneath the cargo compartment 40. Likewise, the DC/AC converter 156 may be located with the container 24 such as, for example, underneath the cargo compartment 40, however, in some embodiments it may be desirable to have the DC/AC converter 156 in close proximity to the power management system 124 and/or the TRU 26 and TRU controller 82. It will be appreciated that in one or more embodiments, while particular locations are described with respect to connection and placement of selected components including the energy storage device 152 and/or DC/AC converter 156, such descriptions are merely illustrative and are not intended to be limiting. Varied location, arrangement and configuration of components is possible and within the scope of the disclosure.

The energy storage system 150 may also include an eletric heater 153. The electric heater 153 is configured to control the temperature of the energy storage device 152. The electric heater 153 may utilize at least one of convection heating and conduction heating. Further, the electric heater 153 may utilize at least one of air and a liquid for the convection heating to transfer heat from the electric heater 153 to the energy storage device 152. The heater 153 is electric, as shown in FIG. 3. The electric heater may be a low voltage DC heater. The TRU controller 82 may be configured to activate the electric heater (the temperature control system) when the ambient air temperature is less than a selected temperature as measured by the ambient air temperature sensors 83 of the TRU 26. For example, if the selected temperature is 10°C (50°F) and the ambient air temperature is less than the selected temperature then a DC/DC inverter 155 may be activated and either (1) a portion of the high-voltage, direct current from the energy storage device 152 is converted to low voltage direct current to power the temperature control system 153 or (2) an additional battery cell or cells in series with a combined voltage less than 15 VDC may be used to power the electric heater 153. The BMS 154 may detect the temperature of the energy storage device 152 and then communicate with the TRU controller 82, when the temperature of the energy storage device 152 has reached a second selected temperature (e.g., 20°C (68°F)) so that the TRU controller 82 may shutoff the electric heater 153.

The temperature control system 153 is an electric heater. The electricity to power the electric heater may be supplied from the DC/DC conversion 155 of HV DC from energy storage device 152 or via a couple cells within the energy storage device 152. In one example, the electric heater may heat air that is in flow communication (i.e. with use of a fan) to the interior of the energy storage device 152. In a second example, the electric heater may heat a liquid to either pump the heated fluid (i.e. with use of a pump) through a thermal plate mounted inside the energy storage device 152 and the electric heater may be in direct thermal communication to the battery cells/modules or the electric heater may be in direct thermal communication to tubes mounted/attached in direct communication to a housing of the energy storage device 152.

The TRU controller 82 adjusts operation of the electric heater 153 for the energy storage device 152 in response to the ambient air temperature detected by the ambient air temperature sensor 83. In one embodiment, the electric heater 153 and the energy storage device 152 are located outside of the TRU 26, as shown in FIG. 3. In another embodiment, the electric heater 153 and the energy storage device 152 are located within the TRU 26. The TRU 26 comprises the energy storage device 152 and the electric heater 153.

The battery management system 154 and DC/AC converter 156 are operably connected to and interface with the TRU controller 82. The TRU controller 82 receives information regarding the status of energy storage system 150, including the energy storage device 152 to provide control inputs to the DC/AC converter 156 to monitor the energy storage device, 152, control charge and discharge rates for the energy storage device 152 and the like.

Continuing with FIG. 3, as described earlier, the power supply interface 120 may include, interfaces to various power sources 122 managed and monitored by power management system 124. The power management system 124 manages and determines electrical power flows in the power supply interface 120 based upon the operational needs of the TRU 26 and the capabilities of the components in the power supply interface 120, (e.g., energy storage device 152, and the like). The power management system 124 is configured to determine a status of various power sources 122, control their operation, and direct the power to and from the various power sources 122 and the like based on various requirements of the TRU 26.

In an embodiment there are four primary power flows managed by the power management system 124. First, the power supplied to the power management system 124 when the TRU system 26 is operably connected to grid power source 182. Second the power supplied to the power management system 124 from an energy storage device 152. Third, the power directed from the power management system 124 to the energy storage device 152. Fourth, the power directed to the TRU 26 from the power management system 124 for providing power to operate the TRU 26.

The four power flows will be transferred through different paths based on the requirements placed on the power management system 124 and particular configuration of the power supply interface 120. The power management system 124 operates as a central power bus to connect various power sources 122 together to supply the power needs of the TRU 26. The power management system 124 controls switching, directing, or redirecting power to/from the five power flows as needed to satisfy the power requirements of the TRU 26. Switching, directing, and redirecting may readily be accomplished employing a bus control switching device 126 of the power management system 124. The bus control switching device 126 may include, but not be limited to, electromechanical and solid state semiconductor switching devices including relays, contactors, solid state contactors as well as semiconductor switching devices such as transistors, FETs, MOSFETS, IGBT's, thyristors, SCR's, and the like. In addition, to facilitate and implement the functionality of the power management system 124, the voltages and frequencies of the power whether supplied by the grid power supply 182 or the DC/AC converter 156 of the energy storage system 150 need to be synchronized to provide a common power source to be supplied to the TRU 26 and/or charge the energy storage device 152. Current draw will be determined by the TRU 26 and the need to charge the energy storage device 152.

The grid power from the grid power source 182 and/or power directed to/from the energy storage system 150 is supplied to the bus control switching device 126 in an overlapping or break-before-make condition as determined by the bus control switching device 126. The DC/AC converter 156, when operating as a DC to AC converter synchronizes the voltage and frequency of the power generated (e.g., 157) with the bus control switching device 126 in order to transfer power from the energy storage device 152 to the power management system 124 (an thereby the TRU 26) as needed. Likewise, grid power from the grid power source 182 provided to the power management system 124 is directed by the bus control switching device 126 once connected and the DC/AC HV battery converter will determine if synced before grid power transfer is made. The DC/AC converter 156 will monitor the bus voltage/frequency of bus control switching device 126 to determine if the above parameters equal before connectivity, thus allowing minimum disruption of the power bus system. The power bus control device 126 communicates to the TRU controller 82 to determine status of flows connected. In an embodiment, the power management system 124, and or the TRU controller 82 provides visual indications of which source is selected and operating on the bus control switching device 126.

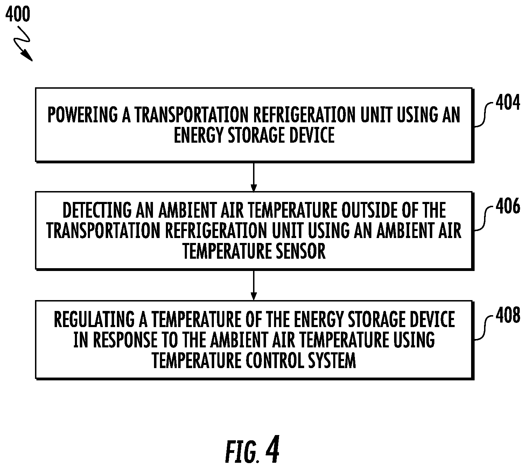

Referring now to FIG. 4, while referencing components of FIGs. 1-3. FIG. 4 shows a flow chart of method 400 of operating a TRU 26. In an embodiment, the method 300 may be performed by the TRU controller 82. At block 404, a TRU 26 is powered using an energy storage device 152. At block 406, an ambient air temperature is detected outside of the TRU 26 using an ambient air temperature sensor 83. At block 408, a temperature of the energy storage device 152 is regulated in response to the ambient air temperature using a temperature control system, wherein the temperature control system is an electric heater 153. The electric heater 153 is configured to regulate the temperature of the energy storage device 152 by adjusting the temperature of the energy storage device 152 up. The method 400 may further comprise: monitoring a temperature of the energy storage device 152 and deactivating the electric heater 153 when the temperature of the energy storage device 152 is greater than a second selected temperature.

The method 400 may also include: converting a small portion of the high voltage direct current of the energy storage device 152 to a low voltage direct current to provide power to the electric heater 153 using a DC/DC converter 155. Additionally, the method 400 may further include: powering the electric heater 153 using a selected number of battery cells within the battery system. The selected number of battery cells may have a voltage less than or equal to 15 VDC.

While the above description has described the flow process of FIG. 4 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the claims. In addition, many modifications may be made to adapt a particular situation or material to the teachings of the present invention without departing from the essential scope, which is defined by the claims. Therefore, it is intended that the present invention not be limited to the particular embodiment disclosed as the best mode contemplated for carrying out this present invention, but that the present invention will include all embodiments falling within the scope of the claims.

## Claims

1. A transportation refrigeration unit (26) comprising:
a compressor (58) configured to compress a refrigerant;
a compressor motor (60) configured to drive the compressor (58), the compressor moto (60) being powered by an energy storage device (152);
an evaporator heat exchanger (72) operatively coupled to the compressor (58);
a controller (82) configured to control operation of the transportation refrigeration unit (26);
an ambient air temperature sensor (83) in electronic communication with the controller (82), the ambient air temperature sensor (83) configured to detect ambient air temperature outside of the transportation refrigeration unit (26),
wherein the controller (82) is configured to adjust operation of a temperature control system (153) for the energy storage device (152) in response to the ambient air temperature, the temperature control system (153) configured to adjust a temperature of the energy storage device (152),
**characterised in that**,
the temperature control system is an electric heater (153).

2. The transportation refrigeration unit (26) of claim 1, further comprising:
a DC/DC converter (155) configured to provide power to the electric heater (153) by converting a small portion of the high voltage direct current of the energy storage device (152) to a low voltage direct current.

3. The transportation refrigeration unit (26) of claim 1, wherein the energy storage device (152) includes a battery system .

4. The transportation refrigeration unit (26) of claim 3, wherein the battery system is configured to utilize a selected number of battery cells within the battery system to provide power to the electric heater (153), wherein the selected number of battery cells have a voltage less than or equal to 15 VDC.

5. The transportation refrigeration unit (26) of claim 1, wherein:
the electric heater (153) and the energy storage device (152) are located outside of the transportation refrigeration unit (26); or
the electric heater (153) and the energy storage device (152) are located within the transportation refrigeration unit (26).

6. The transportation refrigeration unit (26) of claim 1, wherein the controller (82) activates the electric heater (153) when the ambient air temperature is less than a selected temperature.

7. The transportation refrigeration unit (26) of claim 1, wherein the electric heater (153) utilizes at least one of convection heating and conduction heating;
optionally, wherein the electric heater (153) utilizes at least one of air and a liquid for the convection heating to transfer heat from the electric heater (153) to the energy storage device (152).

8. A method of operating a transportation refrigeration unit (26), the method comprising:
powering a transportation refrigeration unit (26) using an energy storage device (152);
detecting an ambient air temperature outside of the transportation refrigeration unit (26) using an ambient air temperature sensor (83); and
regulating a temperature of the energy storage device (152) in response to the ambient air temperature using a temperature control system (153),
**characterised in that**,
the temperature control system is an electric heater (153).

9. The method of claim 8, further comprising:
converting a small portion of the high voltage direct current of the energy storage device (152) to a low voltage direct current to provide power to the electric heater (153) using a DC/DC converter (155).

10. The method of claim 8, wherein the energy storage device (152) includes a battery system.

11. The method of claim 10, further comprising:
powering the electric heater (153) using a selected number of battery cells within the battery system, wherein the selected number of battery cells have a voltage less than or equal to 15 VDC.

12. The method of claim 8, wherein:
the electric heater (153) and the energy storage device (152) are located outside of the transportation refrigeration unit (26); or
the electric heater (153) and the energy storage device (152) are located within the transportation refrigeration unit (26).

13. The method of claim 8, further comprising:
activating the electric heater (153) when the ambient air temperature is less than a selected temperature.

14. The method of claim 8, wherein the electric heater (153) utilizes at least one of convection heating and conduction heating;
optionally, wherein the electric heater (153) utilizes at least one of air and a liquid for the convection heating to transfer heat from the electric heater (153) to the energy storage device (152).

## Patentansprüche

1. Transportkühlsystem (26), umfassend:
einen Kompressor (58), der dazu ausgelegt ist, ein Kältemittel zu verdichten;
einen Kompressormotor (60), der dazu ausgelegt ist, den Kompressor (58) anzutreiben, wobei der Kompressormotor (60) von einer Energiespeichervorrichtung (152) mit Leistung versorgt wird;
einen Verdampferwärmetauscher (72), der betriebsfähig mit dem Kompressor (58) gekoppelt ist;
eine Steuereinheit (82), die dazu ausgelegt ist, Betrieb der Transportkühleinheit (26) zu steuern;
einen Umgebungslufttemperatursensor (83) in elektronischer Kommunikation mit der Steuereinheit (82), wobei der Umgebungslufttemperatursensor (83) dazu ausgelegt ist, Umgebungslufttemperatur außerhalb der Transportkühleinheit (26) zu erfassen,
wobei die Steuereinheit (82) dazu ausgelegt ist, Betrieb eines Temperatursteuersystems (153) für die Energiespeichervorrichtung (152) in Reaktion auf die Umgebungslufttemperatur anzupassen, wobei das Temperatursteuersystem (153) dazu ausgelegt ist, eine Temperatur der Energiespeichervorrichtung (152) anzupassen,
**dadurch gekennzeichnet, dass**
das Temperatursteuersystem ein elektrisches Heizelement (153) ist.

2. Transportkühleinheit (26) nach Anspruch 1, weiter umfassend:
einen Gleichspannungswandler (155), der dazu ausgelegt ist, Leistung an das elektrische Heizelement (153) bereitzustellen, indem ein kleiner Teil des Hochspannungsgleichstroms der Energiespeichervorrichtung (152) zu einem Niederspannungsgleichstrom umgewandelt wird.

3. Transportkühleinheit (26) nach Anspruch 1, wobei die Energiespeichervorrichtung (152) ein Batteriesystem beinhaltet.

4. Transportkühleinheit (26) nach Anspruch 3, wobei das Batteriesystem dazu ausgelegt ist, eine ausgewählte Anzahl von Batteriezellen innerhalb des Batteriesystems zu nutzen, um Leistung an das elektrische Heizelement (153) bereitzustellen, wobei die ausgewählte Anzahl von Batteriezellen eine Spannung kleiner oder gleich 15 VDC aufweist.

5. Transportkühleinheit (26) nach Anspruch 1, wobei:
das elektrische Heizelement (153) und die Energiespeichervorrichtung (152) sich außerhalb der Transportkühleinheit (26) befinden; oder
das elektrische Heizelement (153) und die Energiespeichervorrichtung (152) sich innerhalb der Transportkühleinheit (26) befinden.

6. Transportkühleinheit (26) nach Anspruch 1, wobei die Steuereinheit (82) das elektrische Heizelement (153) aktiviert, wenn die Umgebungslufttemperatur niedriger als eine ausgewählte Temperatur ist.

7. Transportkühleinheit (26) nach Anspruch 1, wobei das elektrische Heizelement (153) zumindest eine von Konvektionserwärmung und Leiterwärmung nutzt;
wobei optional das elektrische Heizelement (153) zumindest eines von Luft und einer Flüssigkeit für die Leiterwärmung nutzt, um Wärme von dem elektrischen Heizelement (153) an die Energiespeichervorrichtung (152) zu übertragen.

8. Verfahren zum Betreiben einer Transportkühleinheit (26), wobei das Verfahren umfasst:
Versorgen einer Transportkühleinheit (26) mit Leistung unter Verwendung einer Energiespeichervorrichtung (152);
Erfassen einer Umgebungslufttemperatur außerhalb der Transportkühleinheit (26) unter Verwendung eines Umgebungslufttemperatursensors (83); und
Regulieren einer Temperatur der Energiespeichervorrichtung (152) in Reaktion auf die Umgebungslufttemperatur, unter Verwendung eines Temperatursteuersystems (153),
**dadurch gekennzeichnet, dass**
das Temperatursteuersystem ein elektrisches Heizelement (153) ist.

9. Verfahren nach Anspruch 8, weiter umfassend:
Umwandeln eines kleinen Teils des Hochspannungsgleichstroms der Energiespeichervorrichtung (152) zu einem Niederspannungsgleichstrom, um dem elektrischen Heizelement (153) unter Verwendung eines Gleichspannungswandlers (155) Leistung bereitzustellen.

10. Verfahren nach Anspruch 8, wobei die Energiespeichervorrichtung (152) ein Batteriesystem beinhaltet.

11. Verfahren nach Anspruch 10, weiter umfassend:
Versorgen des elektrischen Heizelements (153) mit Leistung unter Verwendung einer ausgewählten Anzahl von Batteriezellen innerhalb des Batteriesystems, wobei die ausgewählte Anzahl von Batteriezellen eine Spannung kleiner oder gleich 15 VDC aufweist.

12. Verfahren nach Anspruch 8, wobei:
das elektrische Heizelement (153) und die Energiespeichervorrichtung (152) sich außerhalb der Transportkühleinheit (26) befinden; oder
das elektrische Heizelement (153) und die Energiespeichervorrichtung (152) sich innerhalb der Transportkühleinheit (26) befinden.

13. Verfahren nach Anspruch 8, weiter umfassend:
Aktivieren des elektrischen Heizelements (153), wenn die Umgebungslufttemperatur niedriger als eine ausgewählte Temperatur ist.

14. Verfahren nach Anspruch 8, wobei das elektrische Heizelement (153) zumindest eine von Konvektionserwärmung und Leiterwärmung nutzt;
wobei optional das elektrische Heizelement (153) zumindest eines von Luft und einer Flüssigkeit für die Leiterwärmung nutzt, um Wärme von dem elektrischen Heizelement (153) an die Energiespeichervorrichtung (152) zu übertragen.

## Revendications

1. Unité de réfrigération de transport (26) comprenant :
un compresseur (58) configuré pour comprimer un réfrigérant ;
un moteur de compresseur (60) configuré pour entraîner le compresseur (58), le moteur de compresseur (60) étant alimenté par un dispositif de stockage d'énergie (152) ;
un échangeur de chaleur d'évaporateur (72) fonctionnellement couplé au compresseur (58) ;
un dispositif de commande (82) configuré pour commander un fonctionnement de l'unité de réfrigération de transport (26) ;
un capteur de température d'air ambiant (83) en communication électronique avec le dispositif de commande (82), le capteur de température d'air ambiant (83) étant configuré pour détecter une température d'air ambiant à l'extérieur de l'unité de réfrigération de transport (26),
dans laquelle le dispositif de commande (82) est configuré pour ajuster un fonctionnement d'un système de commande de température (153) pour le dispositif de stockage d'énergie (152) en réponse à la température d'air ambiant, le système de commande de température (153) étant configuré pour ajuster une température du dispositif de stockage d'énergie (152),
**caractérisé en ce que**,
le système de commande de température est un radiateur électrique (153).

2. Unité de réfrigération de transport (26) selon la revendication 1, comprenant en outre :
un convertisseur CC-CC (155) configuré pour fournir une puissance au radiateur électrique (153) par la conversion d'une petite partie du courant continu haute tension du dispositif de stockage d'énergie (152) en un courant continu basse tension.

3. Unité de réfrigération de transport (26) selon la revendication 1, dans laquelle le dispositif de stockage d'énergie (152) inclut un système de batterie.

4. Unité de réfrigération de transport (26) selon la revendication 3, dans laquelle le système de batterie est configuré pour utiliser un nombre sélectionné de cellules de batterie à l'intérieur du système de batterie pour fournir une puissance au radiateur électrique (153), dans laquelle le nombre sélectionné de cellules de batterie présentent une tension inférieure ou égale à 15 VCC.

5. Unité de réfrigération de transport (26) selon la revendication 1, dans laquelle :
le radiateur électrique (153) et le dispositif de stockage d'énergie (152) sont situés à l'extérieur de l'unité de réfrigération de transport (26) ; ou
le radiateur électrique (153) et le dispositif de stockage d'énergie (152) sont situés à l'intérieur de l'unité de réfrigération de transport (26).

6. Unité de réfrigération de transport (26) selon la revendication 1, dans laquelle le dispositif de commande (82) active le radiateur électrique (153) lorsque la température d'air ambiant est inférieure à une température sélectionnée.

7. Unité de réfrigération de transport (26) selon la revendication 1, dans laquelle le radiateur électrique (153) utilise au moins l'un parmi un chauffage par convection et un chauffage par conduction ;
facultativement, dans lequel le radiateur électrique (153) utilise au moins l'un parmi de l'air et un liquide pour le chauffage par convection pour transférer une chaleur depuis le radiateur électrique (153) au dispositif de stockage d'énergie (152).

8. Procédé de fonctionnement d'une unité de réfrigération de transport (26), le procédé comprenant :
l'alimentation d'une unité de réfrigération de transport (26) en utilisant un dispositif de stockage d'énergie (152) ;
la détection d'une température d'air ambiant à l'extérieur de l'unité de réfrigération de transport (26) en utilisant un capteur de température d'air ambiant (83) ; et
la régulation d'une température du dispositif de stockage d'énergie (152) en réponse à la température d'air ambiant en utilisant un système de commande de température (153),
**caractérisé en ce que**,
le système de commande de température est un radiateur électrique (153).

9. Procédé selon la revendication 8, comprenant en outre :
la conversion d'une petite partie du courant continu haute tension du dispositif de stockage d'énergie (152) en un courant continu basse tension pour fournir une puissance au radiateur électrique (153) en utilisant un convertisseur CC-CC (155).

10. Procédé selon la revendication 8, dans lequel le dispositif de stockage d'énergie (152) inclut un système de batterie.

11. Procédé selon la revendication 10, comprenant en outre :
l'alimentation du radiateur électrique (153) en utilisant un nombre sélectionné de cellules de batterie à l'intérieur du système de batterie, dans lequel le nombre sélectionné de cellules de batterie présentent une tension inférieure ou égale à 15 VCC.

12. Procédé selon la revendication 8, dans lequel :
le radiateur électrique (153) et le dispositif de stockage d'énergie (152) sont situés à l'extérieur de l'unité de réfrigération de transport (26) ; ou
le radiateur électrique (153) et le dispositif de stockage d'énergie (152) sont situés à l'intérieur de l'unité de réfrigération de transport (26).

13. Procédé selon la revendication 8, comprenant en outre :
l'activation du radiateur électrique (153) lorsque la température d'air ambiant est inférieure à une température sélectionnée.

14. Procédé selon la revendication 8, dans lequel le radiateur électrique (153) utilise au moins l'un parmi un chauffage par convection et un chauffage par conduction ;
facultativement, dans lequel le radiateur électrique (153) utilise au moins l'un parmi de l'air et un liquide pour le chauffage par convection pour transférer une chaleur depuis le radiateur électrique (153) au dispositif de stockage d'énergie (152).
